# EUROPÄISCHE PATENTANMELDUNG

(11) **EP 0 952 338 A1**
(43) Veröffentlichungstag der Anmeldung: **27.10.1999**
(21) Anmeldenummer: 98106034.6
(22) Anmeldetag: 02.04.1998
(51) Int. Cl.: F03G 3/00

(54) **Fliehkraftmotor**

(71) Anmelder: Wassermann, Franz, 6421 Rietz (AT)
(72) Erfinder: Wassermann, Franz, 6421 Rietz (AT)

(57) **Zusammenfassung**

Ein Fliehkraftmotor besteht aus einer fliehkraftreglerartigen Vorrichtung, nämlich Hauptwelle (15) und Anschlagflansch (4) mit Tragrolle (28) mit einer drehbaren Nabe (18) mindestens zwie auf dieser Nabe (18) angebrachten Gleitwellen (8, 9), den Gelenkscheren (7), den fixen Schellen (25), welche über die Präzisionsrollenketten (20) untereinander mit den einmal starr (1) einmal längsbeweglichen Massengewichten (1a) verbunden sind und ebenso verbunden sind mit der Reglermuffe (10), Steuerungsteil (13), mit Gleitstein (6) und Zahnstange (21) mit Zahnrad (12).

Die vier Gleitwellen (8, 9), welche untereinander jeweils zwei davon mit Präzisionsrollenketten verbunden sind, haben vorzugsweise über die drehbare Schelle (19) an Gleitwelle (8) und die Präzisionsrollenketten (2) Verbindung über die Halterung (27) mit der Steuerungsmuffe (3) und (5) mit Arretierungsbolzen (16).

Weiters besteht dieser Fliehkraftmotor aus einer drehbar auf der Hauptwelle montierten Mitnehmerscheibe (17) mit Freilaufkupplung (14) welche einmal über Seil (23), Freilaufkupplung (22) und Seil (29) mit der Reglermuffe (10) verbunden ist, anderseits einmal über Seil (24) mit Zugfeder (26) Verbindung hat und dadurch die erforderliche Übertragung eines kleinen Drehmoments auf den laufenden Fliehkraftmotor für die Erhaltung einer stets gleichgroßen Umlaufgeschwindigkeit der Massengewichte (1, 1a) ermöglicht. Zudem besteht eine Startsperre, Knagge (11) mit Sperrstift (nicht gezeichnet).

## Beschreibung

Die Erfindung bezieht sich auf einen Motor, welcher mit pulsierender Fliehkraft betrieben wird. Das heißt, diese pulsierende Fliehkraft ist genauso kostenlose Energie, wie Sonnenenergie (Solar, Wind, Wasser usw.)

Zum Stand der Technik: Es sind keine Motoren, sprich Antriebe bekannt, die ohne den bekannten Energieträgern (ausgenommen Solar, Wind, Wasser oder dergleichen) betrieben werden.
Gegenstand der vorliegenden Erfindung, ist ein Fliehkraftmotor, welcher Erfindungsgemäß durch unspektakuläre (keine Atomspaltung) Nutzung der Zusammenhaltskräfte (Kohäsionskräfte) von Molekülen und Atomen (z.B. Stahl) fester Materie pulsierende Fliehkraft erzeugt, welche diesen Fliehkraftmotor antreibt und zur unerschöpflichen Energiequelle macht.
erfindungsgemäß wird dies dadurch erreicht, indem mindestens eine an eine feststehende Hauptwelle und Nabe drehbar gelagerte Masse durch die Zusammenhaltskräfte (Kohäsionskräfte) der Moleküle eines festen Stoffes, z.B. Metall, die um die Hauptwelle umlaufenden Massen, für Sekundenbruchteile durch eine 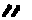 Stop and Go" Schaltung einer erfindungsgemäßen Arretierungsvorrichtung zum Mittelpunkt der Hauptwelle hin, eingelenkt werden, wobei die Umlaufge schwindigkeit der umlaufenden Massen unbeeinträchtigt, d.h., gleich bleibt. Durch diese Einlenkung verkürzt sich der Radius der umlaufenden Massen, wodurch eine enorme Steigerung der Fliekräfte dieser umlaufenden Massen erreicht wird. Diese gesteigerten Fliehkräfte, können sodann durch entsprechende Kraftübertragungselemente in nutzbare Energie umgewandelt werden.
Dieser erfindungsgemäße Fliehkraftmotor weist den Vorteil auf, daß mit ihm durch ein in Dauerfolge impulsmäßiges Einlenken auf kleineren Radius der umlaufenden Massen durch Folgeschaltung mit einer Steuerungsmuffe, eine unerschöpfliche Energie erzeugt werden kann. Dieser Fliehkraftmotor bleibt unabhängig von Ort, Witterung oder anderen Umständen. Die Nutzung der Kohäsionskräfte von Molekülen fester Materie, kann wie im konkretem Fall, durch das Auflaufen der mitumlaufenden Steuerungsmuffe auf einen Anschlag an der fixierten Hauptwelle der umlaufenden Massen mit 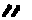 Stop and Go" Arretierung (wie oben angeführt), welche durch mechanische oder elektronische Folgesteuerung für Sekundenbruchteile erfolgt, erreicht werden. Ebenso kann wie in einem weiteren denkbaren Beispiel diese erfindungsgemäße Nutzbarmachung der Kohäsionskräfte fester Materie zur Gewinnung von Energie, durch 2 Umlenkungkreispendelbahnen für eine umlaufende Masse entsprechend positioniert zur Einlenkung auf kleineren Radius derselben (wobei die Umlaufgeschwindigkeit der umlaufenden Massen unbeinträchtigt bleibt, d.h. gleichbleibt) und dadurch entstehnede Steigerung der Fliehkraft angewandt werden.
Diese laut Patentzeichnung erfindungsgemäß gesteigerte Fliehkraft, kann über die entsprechende Vorrichtung in Bewegung Energie umgewandelt werden, wobei ein geringer prozentueller Anteil dieser erfindungsgemäß gewonnenen Energie in erforderliche kleine Kraftimpulse über entsprechende Übertragungselemente (z.B. Federkraft, kleiner E-Motor oder ähnliches) zur Erhaltung der erforderlichen, konstanten Umlaufgeschwindigkeit der umlaufenden Massen verwendet werden. Die Steigerung der Fliehkraft wird erfindungsgemäß dadurch erreicht, indem eine um die fixe Hauptwelle, ebenfalls mitlaufende Steuerungsmuffe, welche z.B.über eine Präzisionsrollenkette, Muffenregler und Scherengelenke, mit der umlaufenden Masse verbunden ist, durch mechanische oder elektronische Folgeschaltung und mittels Anschlag der Steuerungsmuffe an einem fixen Nocken (Arretierung) an der fix verankerten Hauptwelle, für den Bruchteil einer Sekunde zum Stillstand gebracht wird. Die Folge dieses Stillstandes ist, daß die an der mitlaufenden Steuerungsmuffe verankerte Präzisionsrollenkette am Umfand derselben sich abwälzt und dadurch über die Verbindung mit dem Scherengelenk die außen an der Präzisionsrollenkette hängende Masse (Gewichte) in die Nähe der Hauptwelle gelenkt wird, wodurch der Radius der umlaufenden Masse verkürzt, und dadurch eine enorme Steigerung der Fliehkraft erreicht wird. Nach Erreichen der vorgesehenen Verkürzung des Radius, durch diese Einlenkung der umlaufenden Massen, wird der Anschlag der Steuerungsmuffe über die Folgesteuerung wieder gelöst und die umlaufenden Massen steigen wieder auf den der gleichbleibenden Umlaufgeschwindigkeit entsprechenden Radius auf. Das heißt, das Einlenken und Wiederausklinken der umlaufenden Massen (Gewichte) erfolgt in Stop and Go Intervallen. Dieser hier beschriebene erfindungsgemäße Vorgang kann eben durch Folgesteuerung zeitlich unbegrenzt wiederholt werden und so kann pausenlos Energie erzeugt werden. Dieser hier beschriebene mit pulsierender Fliehkraft betriebene Fliehkraftmotor, kann anstelle von heutzutage verwendeten Antriebsmotoren, welche zum Großteil (außer Wasserkraft, Windkraft, Erdwärme, Solar usw.) mit fossilen Brennstoffen betrieben werden, eingesetzt werden. Außerdem kann dieser Fliehkraftmotor sowohl in vertikaler, als auch horizontaler oder jeden anderen Lage ausgeführt werden.

Im folgendem wird die Erfindung anhand eines Beispiels und mit Bezug auf die beiliegende Zeichnung näher erläutert, wobei
Abbildung 1) im Viertellängsschnitt einen erfindungsgemäßen Fliekraftmotor zeigt in seinen Arbeitsphasen und
Abbildung 2) im Schnitt A/B die Ablaufphase für die erforderliche erfindungsgemäße Pulsation der Fliehkraft zum Antrieb des Fliehkraftmotors darstellt.

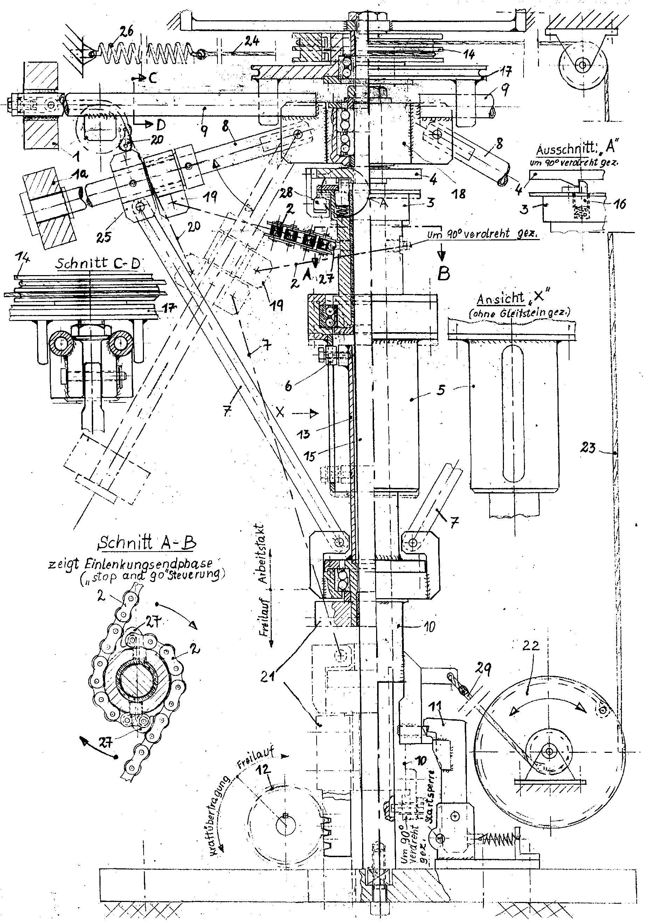

In Abbildung 1 sind mindesten zwei Gewichtsmassen Position 1 und 1a an Position 8, 9, 18 beidseitig gedacht montiert dargestellt. Diese mittels z.B. Präzisionsrollenketten Pos.2, 20 oder bekannten anderen abrollbaren Maschinenbauelementen wie Stahlseilen usw. mit der erfindungsgemäßen Steuerungsmuffe Pos. 3, 16 über Pos. 19, 25 verbundenen Gewichtsmassen Pos. 1, 1a werden durch die erfindungsgemäße Folgesteuerung mittels Pos. 3, 5, 6, 7, 10 und 13 die erfindungsgemäß gesteigerten Fliehkräfte erzeugt. Diese erfindungsgemäß gewonnenen gesteigerten Fliehkräfte werden von Zahnstange Pos. 21 über das Zahnrad Pos. 12 mit Freilaufkupplung auf z.B. ein anzutreibendes Stromaggregat übertragen, d.h. selbiges angetrieben.

Der wegen den auftretenden Reibungswiderständen erforderliche Hilfsantrieb für die kontinuierlich gleichbleibende Umlaufgeschwindigkeit der permanent umlaufenden Gewichtsmasseln Pos. 1, 1a kann durch einen geringen Anteil der erfindungsgemäß gewonnenen Energie am Stromaggregat über einen kleinen E-Motor, welcher mit einem Antriebssystem für die umlaufenden Gewichtsmasseln Pos. 1, 1a gekuppelt ist, bewerkstelligt werden (ist nicht eingezeichnet um Verwirrung zu vermeiden).

Ebenso besteht auch die Möglichkeit diesen erforderlichen Antrieb zur Überwindung der auftretenden Reibungswiderstände, wie aus derPatentzeichnung Abb. 1 ersichtlich, durch speichern dieser erforderlichen Hilfsantriebskraft mittels Pos. 22, 23, 14, 24 und 26 und Wiederabgabe derselben wieder über die Freilaufkupplungen Pos. 22 und 14 in den gesteuert erforderlichen Intervallen (dazu erforderliche Vorrichtung nicht gezeichnet um Verwirrung zu vermeiden) zu erreichen.

Das Starten dieses erfindungsgemäßen Fliehkraftmotors kann mit Batterie über Startermotor, oder mittels anderer händischer Starteinrichtung z.B. Seilzugstart erfolgen, über Mitnehmer Pos. 17.

## Patentansprüche

1. Fliehkraftmotor erfindungsgemäß mit pulsierender Fliehkraft angetrieben besteht aus einer fliehkraftreglerartigen Vorrichtung (6, 7, 8, 9, 10, 13, 15, 18, 20, 21, 25) mit mindestens vier Fliehkraftgwichten (1, 1a), dadurch gekennzeichnet, daß diese ihrerseits, jeweils mindestens 2 davon, untereinander durch vorzugsweise Präzisionsrollenketten (20), Schelle (25), Gelenkscheren (7), mit Reglermuffe (10, 12, 21) verbunden sind, und nochmals dadurch gekennzeichnet, daß diese Fliehkraftgewichte (1, 1a) zusätzlich über, einmal drehbare Schellen (19), einmal starre Schellen (25), Präzisionsrollenketten (2) und Halterung (27) angekoppelt, wiederum dadurch gekennzeichnet, daß diese Positionen mit der drehbaren erfindungsgemäßen Steuerungsmuffe (3) und Arretierungsbolzen (16) verbunden sind, sodaß dieser mind. eine Arretierungsbolzen (16) erfindungsgemäß unter Nutzung der inneren Kohäsionskräfte seiner Atome und Moleküle und Anschlags (3) Stop and Go gesteuerte Intervalle ermöglicht wodurch bekannterweise keine Beieinträchtigung der Umlaufgeschwindigkeit der umlaufenden Fliehkraftgewichte (1-1a) passiert, und dadurch erfindungsgemäß pulsierende Fliehkraft entsteht, wobei die der geforderten Leistung entsprechende erforderliche Umlaufgeschwindigkeit der umlaufenden Fliehkraftgewichte (1-1a) erfindungsgemäß schon vor dem Start des Fliehkraftmotors mit Knagge (11) durch gesteigerten Startantrieb sich ergibt, wobei nach erfolgtem Start weiters gekennzeichnet dadurch, daß die inneren Zusammenhaltkräfte (Kohäsionskräfte) der Atome und Moleküle der Pos. (3, 4, 15 und 16) als Gegenkraft (gesteigerte Zentripedalkraft) für die anwachsende Zentrifugalkraft entstanden durch die erfindungsgemäße Einlenkung von Pos (1, 1a) genutzt werden.

2. Fliehkraftmotor gemäß Anspruch 1) dadurch gekennzeichnet, daß die Fliehkraftgewichte (1, 1a), einmal auf starrer, horinzontaler Gleitwelle (9) längsbeweglich und einmal fix auf vertikal radial bewegender Gleitwelle (8), mit der drehbaren Nabe (18) verbunden sind.

3. Fliehkraftmotor gemäß Anspruch 2) dadurch gekennzeichnet, daß die zwei horizontalen Gleitwellen (9) wie auch die zwei Gleitwellen (8) sowie Nabe (18) über den Mitnehmer (17) und Freilaufkupplungen (22, 14), Seile (23,24) den permanenten Hilfsantrieb gespeist aus erfahrungsgemäß ca. 10% der erfindungsgemäß gewonnenen Energie erhalten.

4. Fliehkraftmotor gemäß Anspruch 3) dadurch gekennzeichnet, daß der Hilfsantrieb über eine Zugfeder (26) oder kleinen E-Motor erfolgt.
